# EUROPEAN PATENT SPECIFICATION

(11) **EP 1 160 801 B1**
(45) Date of publication and mention of the grant of the patent: **12.05.2010**
(21) Application number: 00902079.3
(22) Date of filing: 03.02.2000
(51) Int. Cl.: H01B 7/30, B60L 5/00, H02J 17/00

(54) **HIGH-FREQUENCY CURRENT MULTICONDUCTOR CABLE AND POWER FEEDING EQUIPMENT FOR ONE OR MORE MOVABLE BODIES USING SAID CABLE**
HOCH FREQUENZ MEHRLEITERKABEL UND STROMZUFÜHRUNGSGERÄT FÜR EIN ODER MEHRERE BEWEGENDE KÖRPER MIT EINEM SOLCHEN KABEL
ENSEMBLE CÂBLE MULTICONDUCTEUR À HAUTE FRÉQUENCE ET ÉQUIPMENT D'ALIMENTATION ÉLECTIQUE POUR UN OU PLUSIEURS CORPS MOBILES UTILISANT UN TEL CÂBLE

(30) Priority: 10.02.1999 JP 3208499; 06.01.2000 JP 2000005695
(43) Date of publication of application: 05.12.2001
(73) Proprietor: DAIFUKU CO., LTD., Osaka-shi, Osaka 555-0012 (JP)
(72) Inventor: NISHINO, Shuzo Daifuku Co., Ltd., Osaka-shi Osaka 555-0012 (JP)
(74) Representative: Engelhardt, Harald
(86) International application number: PCT/JP2000/000600
(87) International publication number: WO 2000/048205

(56) References cited:
- WO-A-96/20526
- DE-A1- 19 716 499
- JP-A- 08 175 232
- JP-A- 08 308 153

## Description

### TECHNICAL FIELD

The present invention relates to a high frequency current multiconductor cable and a feeding equipment for one or more movable bodies using the high frequency current multiconductor cable.

### BACKGROUND ART

As for a known feeding equipment for feeding high frequency current from a power source by using a high frequency current multiconductor cable, there is one disclosed, e.g., in Japanese Patent Kokai Hei 6-153305.

In the feeding equipment, a line (induction line) to which a given high frequency current is fed from a power source device is laid along a guide rail (an example of movable line) for a carriage (an example of movable body), and the carriage is provided with a pickup coil which is fed from the induction line in a noncontact manner. In the carriage, connected in parallel with the pickup coil is a capacitor cooperating with the pickup coil to constitute a resonance circuit which resonates at the frequency of the induction line, the capacitor having a rectifying/smoothing circuit connected thereto. Further, connected to this rectifying/smoothing circuit is a stabilization power circuit for maintaining the output voltage at a reference value. Through an inverter, this stabilization power circuit feeds a motor, corresponding to a load, connected to the traveling wheels of the carriage.

The high frequency current fed from the power source device to the induction line concentrates near the conductor surface due to the skin effect, which means that the effective cross-sectional area of the conductor decreases, with the result that the resistance of the line becomes higher than when dc current is passed through the line; the resistance also increases with increasing frequency. In order to avoid the loss caused by the resistance increasing due to the skin effect, a litz wire (enamel-coated, small-diameter conductors stranded together) is widely used as a cable used as a line for passing high frequency current therethrough.

However, the known cable described above poses the following problems.
1. The cable using the litz wire makes it necessary to remove the enamel and solder when it is to be connected; thus, the terminal preparation is troublesome and it is difficult to maintain the quality and reliability of such terminal preparation.
2. Litz wires, which are expensive, form a factor in high installation cost.

To solve such problems in a simple manner, it may be contemplated to use a multiconductor cable formed by bundling a plurality of vinyl-coated conductors. Multiconductor cables require no soldering and allow the use of conventional crimp terminals, thus extremely facilitating the terminal preparation, and their cost is about half that of litz wires.

However, as a factor which causes an increase in the resistance of the line when high frequency current is passed therethrough, besides the skin effect, there is the proximity effect. This occurs in such a manner that when a conductor is present in the proximity of an opposed conductor, high frequency current which concentrates near the surface of the conductor due to the skin effect produces a counter electromotive force in the opposed conductor, changing the current distribution.

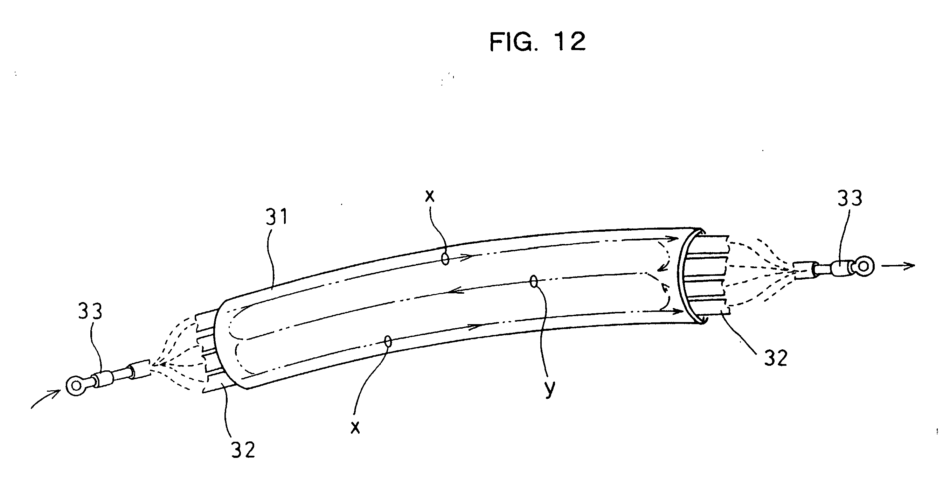

The multiconductor cable brings about a difference in current phase between the conductors disposed at different distances from the center. And the nearer to the center is an electric wire disposed, the greater is the number of electric wires from which it receives the effect; therefore, as shown in Fig. 12, electric wires disposed nearer to the center have, as a result, a current y flowing therethrough which has a component opposite in direction to a current x which flows through outer electric wires, so that a circulating current flows through the line, resulting in an increase in resistance. Since passing a large, high frequency current is attended by a large loss due to this resistance, the multiconductor cable has not been suitable for use as a line for passing high frequency current. In Fig. 12, a multiconductor cable 31 is used as a high frequency current cable with the electric wires 32 bundled at each end and having a crimp terminal 33 attached thereto.

In addition, the proximity effect can hardly be removed by the use of a litz wire. Particularly, in the terminal preparation, a number of litz wires are simultaneously soldered for unification, whereby a difference in current phase tends to occur due to the difference in spatial arrangement when individual litz wires are stranded, thus resulting in an increase in resistance.

DE 197 16 499 A1 shows a mains connection lead comprising a plurality of covered electric wires which are plaited together and enclosed by a number of soft ferrite rings. According to this document the covered electric wires can pass the rings solely or as a bundle.

The invention has for its object to remove the proximity effect in a high frequency multiconductor cable.

To achieve this object the high frequency current multiconductor cable of the invention comprising a current balancing circuit that is formed by bundling electric wires equispaced from the center of the cable, and passing the bundles through a magnetic body in such a manner that ampere-turns or current densities become the same.

According to such arrangement, the counter electromotive force produced due to the difference in spatial arrangement when the electric wires of the feeder are stranded is cancelled by a current balancing circuit, forcing the individual electric wires of the feeder to take exactly the same current phase and current value, with the result that an increase in resistance due to the proximity effect is prevented; therefore, a line which suffers less resistance loss is obtained.

Further, a power feeding equipment for one or more movable bodies which uses the high frequency current multiconductor cable of the invention is a feeding equipment comprising an induction line extending along a moving path of the one or more moving bodies and supplying a constant high frequency current from a power source device, and a pickup coil provided in each moving body and being fed with power from the induction line in a contactless manner, characterized in that the foregoing induction line is formed by using the high frequency current multiconductor cable.

According to such arrangement, even when the induction line is arranged to extend for a long distance, an increase in resistance due to the proximity effect can be suppressed by means of the current balancing circuit, and the induction line can be formed by using the multiconductor cable. Furthermore the use of the multiconductor cable eliminates the need for soldering, facilitates the terminal preparations, largely improves working efficiency in laying out the cable, and reducing the cost of forming the induction line to about half as compared with the case of using a litz wire to form the induction line , thereby realizing a cost reduction to a great extent.

### BRIEF DESCRIPTION OF THE DRAWINGS

Fig. 1 is a structural view, partly in section, of a high frequency current multiconductor cable used as a line for passing high frequency current for a feeding equipment in an embodiment 1 of the invention;
Fig. 2 is an explanatory view, in section, of the electric wires of the high frequency current multiconductor cable for the feeding equipment;
Fig. 3 is a circuit diagram of the feeding equipment;
Fig. 4 is a circuit diagram of an induction line for a feeding equipment according to another form of the embodiment 1 of the invention;
Fig. 5 is a principal structural view of a high frequency current multiconductor cable used as a line for passing high frequency current for a feeding equipment according to another form of the embodiment 1;
Fig. 6 is an explanatory view, in section, of the electric wires of a high frequency current multiconductor cable for a feeding equipment according to another form of the embodiment 1;
Fig. 7 is a structural view, partly in section, of a high frequency current multiconductor cable used as a line for passing high frequency current for a feeding equipment in an embodiment 2 of the invention;
Fig. 8 is an explanatory view, in section, of the electric wires of the high frequency current multiconductor cable for the feeding equipment;
Fig. 9 is a circuit diagram of the feeding equipment;
Fig. 10 is a principal structural view of a high frequency current multiconductor cable used as a line for passing high frequency current for a feeding equipment according to another form of the embodiment 2;
Fig. 11 is a principal structural view of a high frequency current multiconductor cable used as a line for passing high frequency current for a feeding equipment according to another form of the embodiment 2; and
Fig. 12 is a view for explanation of problems in a known multiconductor cable.

### BEST MODE FOR EMBODYING THE INVENTION

### (Embodiment 1)

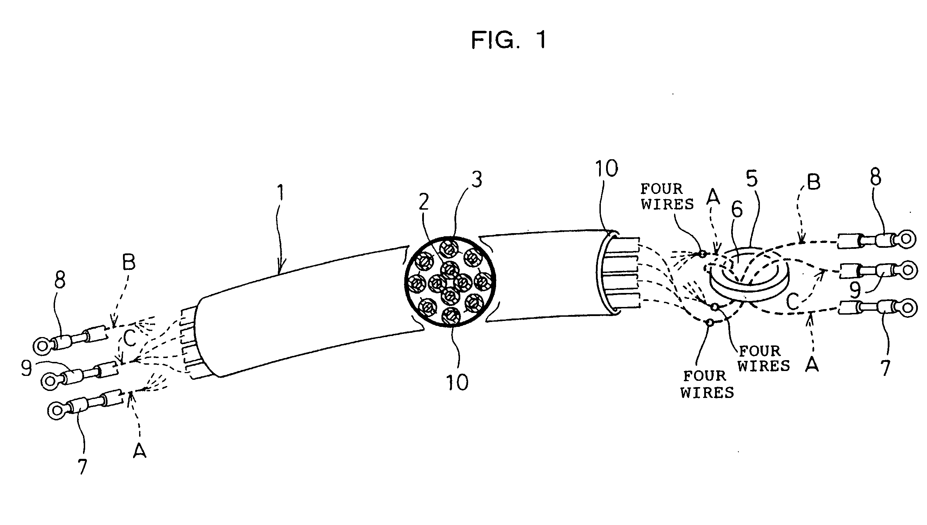

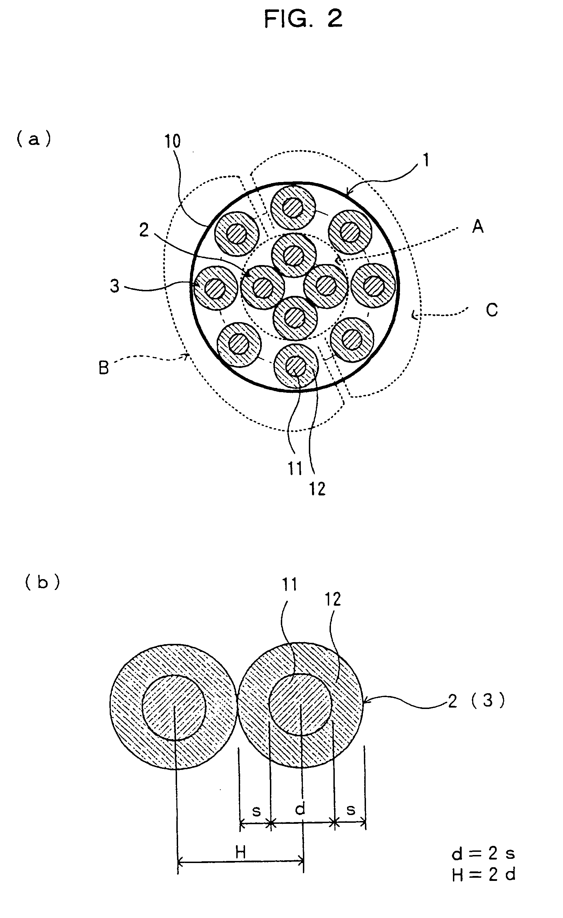

In Fig. 1, the numeral 1 denotes a high frequency current multiconductor cable. As shown enlarged in Fig. 2 (a), four electric wires (core wires) 2 equispaced from the center of the cable 1 are disposed in an inner region in the cable 1, and disposed outwardly thereof and equispaced from the center are electric wires 3 whose number is an integral multiple of the number of inner electric wires 2 (twice, or 8 in Fig. 1). Further, the cross-sectional area of the conductor 11 of the electric wire 2 is equal to that of the conductor 11 of the electric wire 3. Further, the bundle of four inner electric wires 2 is named A, and the two bundles each consisting of four (the same as the number of inner electric wires 2) outer electric wires 3 are respectively named B and C.

Further, in Fig. 1, the numeral 5 denotes a ring-shaped ferrite body (an example of magnetic material) constituting a current balancing circuit, and with respect to this ferrite body 5, as shown, the bundle A of four inner electric wires 2 is passed through a hole 6 in the ferrite body 5 once, then around the outside of the ferrite body 5 and again though the hole 6 in the ferrite body 5 in the same direction. Further, the two bundles B and C of outer electric wires 3 are passed through the hole 6 in the ferrite body 5 in a direction opposite to the direction of passage of the bundle A of inner electric wires 2.

Such way the electric wires 2 and 3 are wound around the ferrite body 5 equalizes the ampere-turns for the inner and outer electric wires 2 and 3, thereby canceling the counter electromotive force produced from the difference in spatial arrangement when the inner and outer electric wires 2 and 3 of the multiconductor cable 1 are twisted together, so that the current phases and current values for the electric wires 2 and 3 of the multiconductor cable 1 are forced to be exactly the same. Therefore, the circulating current flowing through the multiconductor cable 1 is cut off, with the result that an increase in resistance due to the proximity effect is prevented and the resistance loss is reduced. As a result, it becomes possible to use the multiconductor cable 1 as a high frequency current multiconductor cable.

The number of electric wires 3 disposed outwardly of the electric wires 2 disposed inside and equispaced from the center is an integral multiple of the number of electric wires 2, as described above; therefore, when the electric wires equispaced from the center of the cable are bundled and passed through the ferrite body 5, the ampere-turns can be easily made equal, the efficiency of laying operation can be improved, and the cost can be reduced.

Further, as shown in Fig. 1, the bundle A of inner electric wires 2 have first crimp terminals 7 attached to the opposite ends thereof, and the bundles B and C of outer electric wires 3 have second and third crimp terminals 8 and 9 attached to the opposite ends thereof, respectively. In Fig. 1, the numeral 10 denotes a cover for the multiconductor cable 1.

Further, the electric wires 2 and 3, as shown in Fig. 2 (b), have the diameter d of their conductors 11 so dimensioned that the diameter d is equal to twice the sum of the thickness s of the cover of the conductor 11 (d = 2 s). Therefore, the distance H between the centers of the conductors 11 of the electric wires 2 and 3 is at least twice the diameter of the conductor 11 (H ≧ 2 d), and as compared with the case where the conductors 11 are in contact, the high frequency effective resistance greatly reduces and so does the loss due to resistance. In addition, when the high frequency is 10 kHz, the diameter d of the conductor 11 is preferably about 1 mm. As a result, the multiconductor cable 1 can be used as a high frequency current multiconductor cable.

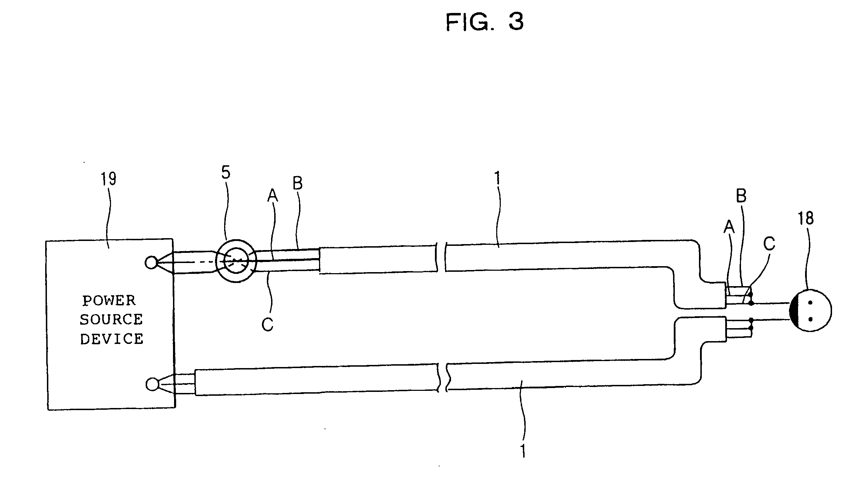

Fig. 3 is a circuit diagram of a feeding equipment using the high frequency current multiconductor cable for feeding high frequency current.

A single ferrite body 5 constituting a current balancing circuit and two multiconductor cables 1 are connected between a receptacle 18 and a high frequency power source device (for example, 10 kHz/100 A power source device) 19.

By inserting the plug of an electric appliance to be used into the receptacle 18, a high frequency current is fed from the power source device 19 to the electric appliance.

Thus, when a high frequency current is to be fed, the provision of a single ferrite body 5 can suppress an increase in resistance caused by the proximity effect, enabling the multiconductor cables 1 to be used as high frequency current cables. Further, when cables are to be connected to the receptacle 18 and the power source device 19 by using the multiconductor cables 1, soldering is unnecessary, facilitating the terminal preparation to greatly improve the operating efficiency. Further, the use of the multiconductor cables 1 reduces the cost to about half of the cost involved in forming an induction line by a litz wire; thus, the cost can be greatly reduced.

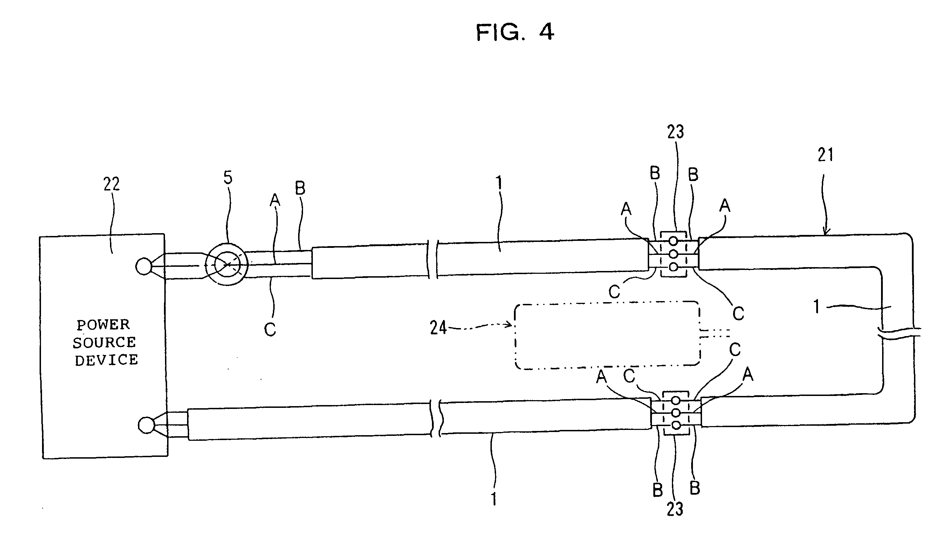

Fig. 4 is a circuit diagram of a high frequency current feeding line (induction line) for a contactless feeding equipment (an example of feeding equipment) using the high frequency current multiconductor cable.

Three series-connected multiconductor cables 1 and a single ferrite body 5 are used to form an induction line 21 extending a long distance, for example, 200 m, and connected to a high frequency power source device (for example, 10 kHz/100 A) 22. Through a terminal block 23, the bundles A of inner electric wires 2 of the cables 1 are continuously connected and the bundles B and C of outer electric wires 3 are respectively continuously connected. The magnetic flux generated by this induction line 21 induces an electromotive force in a pickup coil 24 shown in phantom lines.

Thus, when the induction line 21 is to be formed over a long distance, an increase in resistance due to the proximity effect can be suppressed by only providing a single ferrite body 5, and the induction line 21 can be formed by using the multiconductor cables 1. Further, the use of the multiconductor cables 1 makes soldering unnecessary, facilitates the terminal preparation to greatly improve the operating efficiency in laying the cables, and reduces the cost to about half of the cost involved in forming an induction line by a litz wire; thus, the cost can be greatly reduced.

In addition, in the embodiment 1, the ferrite body 5 is used as an example of magnetic material, but any other material may be used provided that its permeability for high frequencies is high and that it will have no eddy current generated therein; for example, amorphous magnetic material may be used. Further, the ferrite body 5 is ring-shaped, but any other shape may be used provided that it has a through-hole 6.

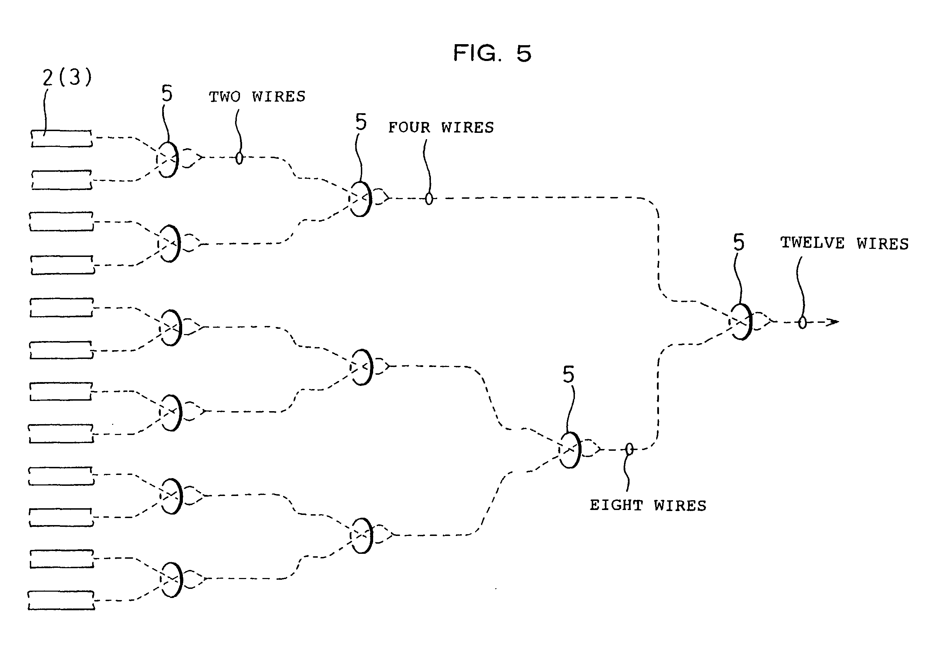

Further, in the embodiment 1, a single ferrite body alone is used to form a current balancing circuit, but, as shown in Fig. 5, a current balancing circuit can be formed by crosswise passing adjoining electric wires 2, 3 through a ferrite body 5, gathering the thus-passed electric wires into a bundle, crosswise passing this bundle and another bundle crossing another ferrite body 5 through a further ferrite body 5, this operation being repeated in order. However, as shown in Fig. 1, by gathering the electric wires equispaced from the center of the cable into bundles A, B, and C, it is possible, as compared with the case of passing the electric wires 2, 3 one by one through the ferrite body 5, to reduce the number of required ferrite bodies 5, to facilitate the operation for passage through the ferrite body 5, to improve the efficiency of laying operation, and to reduce the cost.

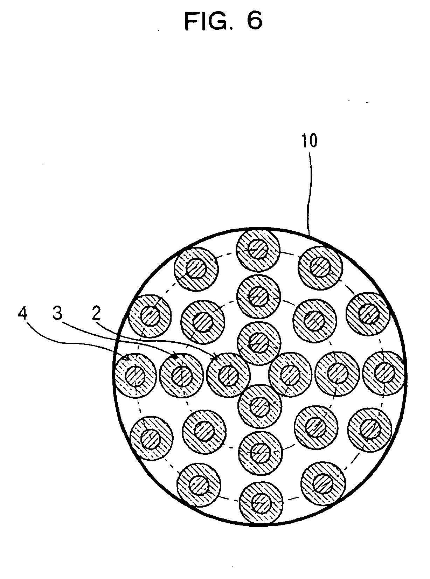

Further, in the embodiment 1, the multiconductor cable 1 is formed of two layers of electric wires 2 and 3, but it is also possible to form a multilayer by arranging electric wires which are equispaced from the center of the cable and whose number is a integral multiple of the number of inner electric wires 2, on the outside of the electric wires 3. Fig. 6 shows a cross section of a three-layer construction. The three-layer construction is formed by arranging 12, or three times the number of inner electric wires 2, electric wires 4 equispaced from the center of the cable, on the outside of the electric wires 3.

### (Embodiment 2)

In the embodiment 1, the multiconductor cable 1 is used to pass an electric current for one circuit. In the embodiment 2, it is used as a cable to pass different electric currents for two circuits.

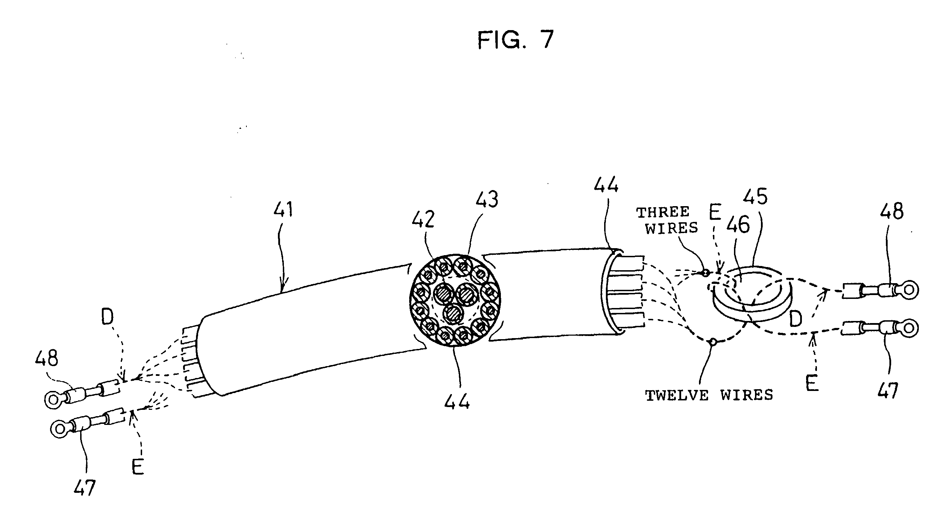

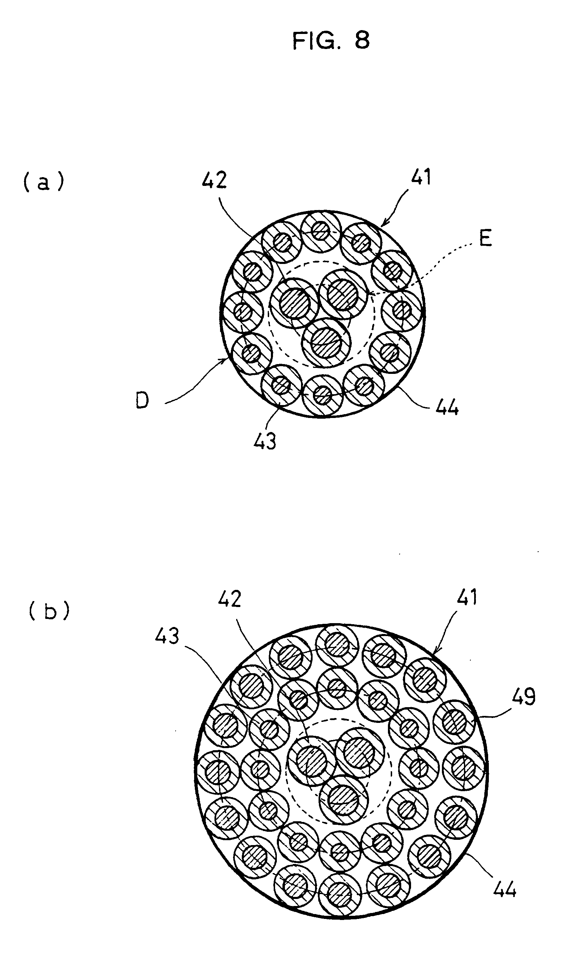

In Fig. 7, the numeral 41 denotes a multiconductor cable comprising, as shown enlarged in Fig. 8 (a), three inner electric wires (core wires) 42 equispaced from the center of the cable 41, and 12 outer electric wires 43 disposed outwardly thereof and equispaced from the center. The numeral 44 denotes a cover for the multiconductor cable 41.

Let S₁ be the cross sectional area of the conductor of each of the 12 outer electric wires 43, S₂ be the cross sectional area of the conductor of each of the three inner electric wires 42, I₁ be the current flowing through each of the 12 outer electric wires 43, and I₂ be the current flowing through each of the three inner electric wires 42, then the following relation holds:
I₁ / S₁ = I₂ / S₂ = K (constant). That is, the current density (the current per unit cross sectional area of the conductor) is constant.

For example, if the cross sectional area S₁ = 0.75 mm², the cross sectional area S₂ = 1,5 mm², that is, if S₂ = 2 S₁ and the current I₁ = 5 A, then the current I₂ = 10 A.

In addition, let D be the bundle of outer electric wires 43 and E be the bundle of inner electric wires 42.

Further, in Fig. 7, the numeral 45 denotes a ring-shaped ferrite body (an example of magnetic material) constituting a current balancing circuit, and with respect to the ferrite body 45, the outer and inner bundles D and E are passed through the hole 46 in the ferrite body 45 in opposite directions, as illustrated. At this time, the overall area W₁ (= ΣS₁) of the cross sectional area S₁ of each electric wire 43 of the outer bundle D and the overall area W₂ (= ΣS₂) of the cross sectional area S₂ of each electric wire 42 of the inner bundle E are calculated and the ratio n (which is a positive integer) between the overall area W₁ and the overall area W₂ is calculated. A bundle of electric wires associated with of this ratio n is wound n times around the ferrite body 45.

For example, when w₁ / W₂ is 2, the inner bundle E is wound twice around the ferrite body 45, and, reversely, when W₂ / W₁ = 2, the outer bundle D is wound twice around the ferrite body 45.

In Fig. 7, W₁ = 12 × 0.75 = 9 mm², W₂ = 3 × 1.5 = 4.5 mm²; therefore, the inner bundle E is wound twice around the ferrite body 45.

Such way the bundles D and E of electric wires are wound around the ferrite body 45 equalizes the current values provided by the inner and outer bundles E and D of electric wires crosslinking the ferrite body 45, thereby canceling the counter electromotive force produced from the difference in spatial arrangement when the inner and outer electric wires 42 and 43 of the multiconductor cable 41 are twisted together, so that the circulating current due to the proximity effect is cut off, with the result that an increase in resistance due to the proximity effect is prevented and the resistance loss is reduced. As a result, it becomes possible to use the multiconductor cable 41 as a high frequency current cable.

In Fig. 7, the numerals 47 and 48 denote crimp terminal crimped to both ends of the bundles D and E of electric wires.

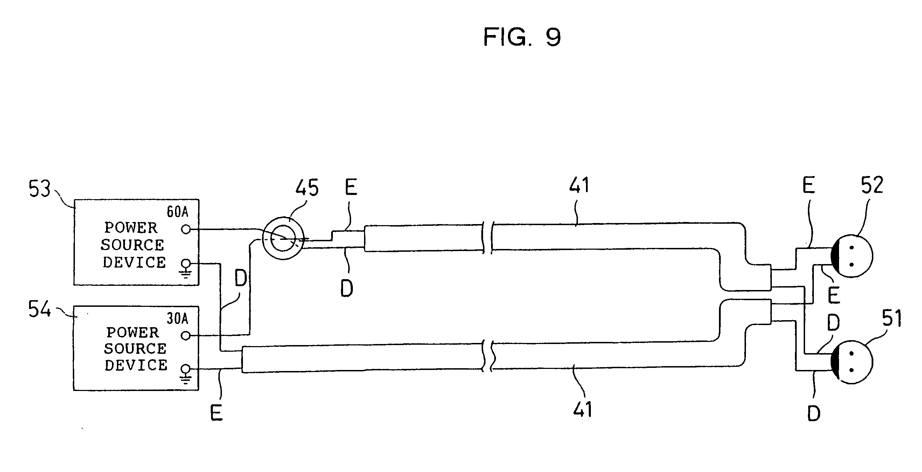

Fig. 9 is a circuit diagram of a feeding equipment using the high frequency current multiconductor cable 41 for feeding high frequency current.

A single ferrite body 45 constituting a current balancing circuit and two multiconductor cables 41 are connected between two receptacle 51, 52 and twp high frequency power source devices (for example, a 10 kHz/60 A power source device and a 10 kHz/30 A power source device) 53, 54.

By inserting the plug of an electric appliance to be used into the receptacle 51, a high frequency current is fed from the power source device 53 to the electric appliance, and by inserting the plug of an electric appliance to be used into the receptacle 52, a high frequency current is fed from the power source device 54 to the electric appliance.

Thus, when two different high frequency currents are to be fed, the provision of a single ferrite body 45 can suppress an increase in resistance caused by the proximity effect, enabling the multiconductor cables 41 to be used as a two-circuit high frequency current cables. Further, when cables are to be connected to the receptacles 51, 52 and the power source devices 53, 54 by using the multiconductor cables 41, soldering is unnecessary, facilitating the terminal preparation to greatly improve the operating efficiency. Further, the use of the multiconductor cables 41 reduces the cost to about half of the cost involved in forming an induction line by a litz wire; thus, the cost can be greatly reduced.

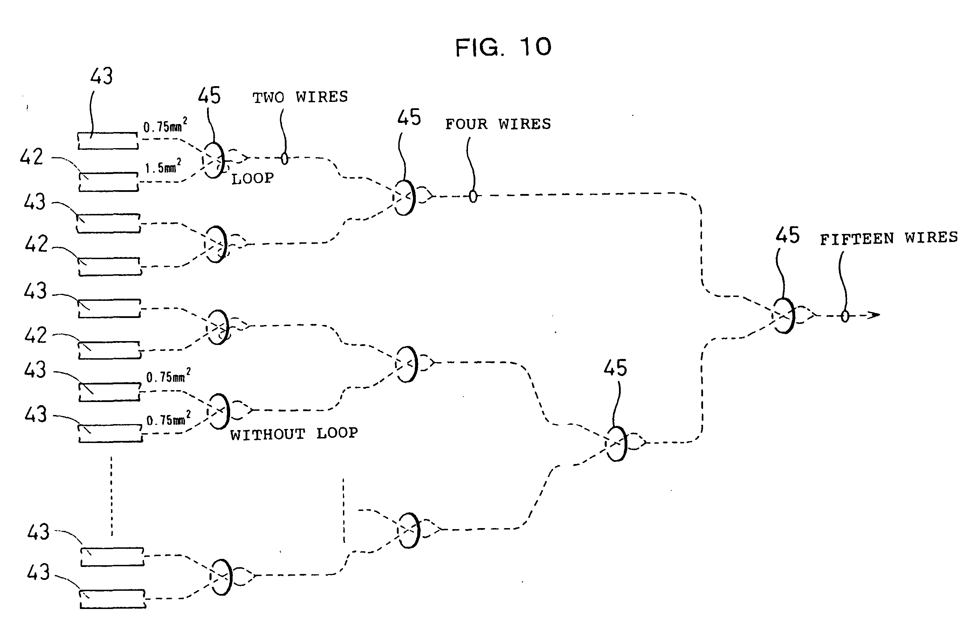

Further, in the embodiment 2, a single ferrite body alone is used to form a current balancing circuit, but, as shown in Fig. 10, a current balancing circuit can be formed by crosswise passing adjoining electric wires 42, 43 through a ferrite body 45 and winding them therearound, gathering the thus-passed electric wires into a bundle, crosswise passing this bundle and another bundle crossing another ferrite body 45 through a further ferrite body 45, this operation being repeated in order.

Further, in the embodiment 2, the multiconductor cable 41 is formed of two layers of electric wires 42 and 43, but it is also possible to form a multilayer by arranging electric wires equispaced from the center of the cable, on the outside of the electric wires 43. Fig. 8(b) shows a cross section of a three-layer construction. The three-layer construction is formed by arranging electric wires (core wires) 49 equispaced from the center of the cable and having the same current density, on the outside of the electric wires 43.

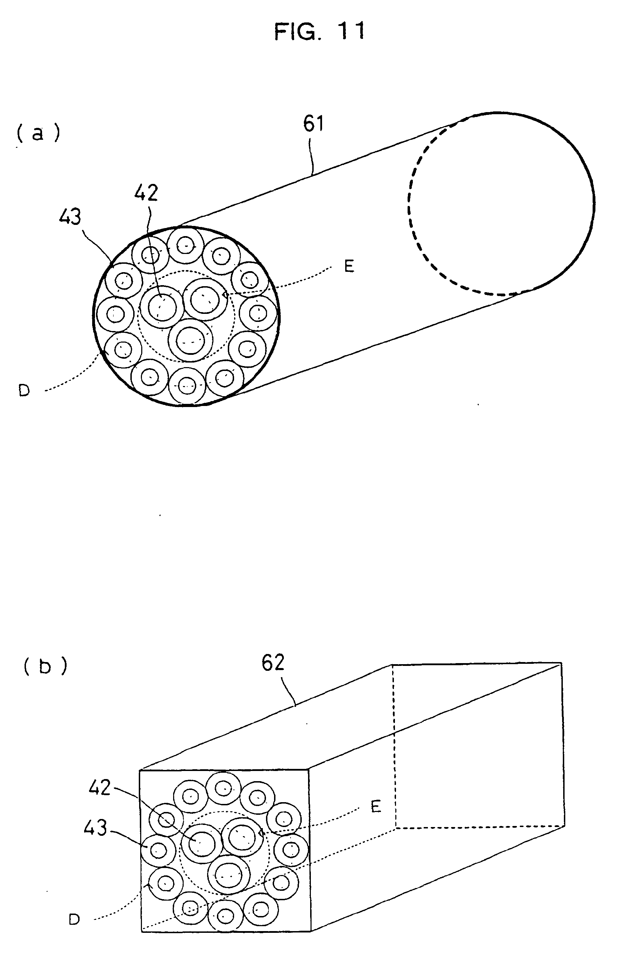

Further, in the embodiments 1 and 2 described above, the feeders are formed by covering electric wires 2, 3, 42 and 43 with covers 10 and 44. However, instead of these covers 10 and 44, as shown in Fig. 11, wiring ducts of polyvinyl chloride (or wiring pits) 61 and 62 of circular or polygonal cross section which do not interfere with feeding, for example, may be installed with electric wires 42 and 43 (electric wires 2 and 3) disposed therein, thus forming a feeder.

## Claims

1. A high frequency current multiconductor cable (1; 41) comprising a plurality of covered electric wires (2, 3, 4; 42,43), and a current balancing circuit for high frequency current flowing through each of said electric wires (2, 3, 4; 42,43), **characterized in that** the current balancing circuit is formed by bundling electric wires (2, 3, 4; 42,43) equispaced from the center of the cable(1; 41), and passing the bundles (A, B, C; D,E) through a magnetic body (5; 45) in such a manner that ampere-turns or current densities become the same.

2. A high frequency current multiconductor cable (1; 41) as set forth in claim 1, **characterized in that** the diameter of the conductor of each electric wire (2, 3, 4; 42, 43) is equal to twice the sum of the thickness of the cover (10; 45) of the conductor.

3. A high frequency current multiconductor cable (1; 41) as set forth in claim 1 or 2, **characterized in that** the number of outer electric wires (3, 4; 43) disposed externally of inner electric wires (2; 42) equispaced from the center of the cable(1; 41) is an integral multiple of the number of inner electric wires (2; 42).

4. A power feeding equipment for one or more movable bodies, comprising an induction line extending along a moving path of the one or more moving bodies and supplying a constant high frequency current from a power source device, and a pickup coil provided in each moving body and being fed with power from said induction line in a contactless manner, **characterized in that** said induction line is the high frequency current multiconductor cable (1; 41) as set forth in any one of claims 1 through 3.

## Patentansprüche

1. Hochfrequenzstrom-Mehrfachleiterkabel (1; 41), das mehrere überzogene elektrische Drähte (2, 3, 4; 42, 43) und eine Stromausgleichssehaltung für einen Hochfrequenzstrom, der durch jeden der elektrischen Drähte (2, 3, 4; 42, 43) fließt, enthält, **dadurch gekennzeichnet, dass** die Stromausgleichsschaltung durch Bündeln elektrischer Drähte (2, 3, 4; 42, 43), die von der Mitte des Kabels (1; 41) gleich beabstandet sind, und durch Führen der Bündel (A, B, C; D, E) durch einen magnetischen Körper (5; 45) in der Weise, dass Amperewindungen oder Stromdichten gleich werden, gebildet ist.

2. Hochfrequenzstrom-Mehrfachleiterkabel (1; 41) nach Anspruch 1, **dadurch gekennzeichnet, dass** der Durchmesser des Leiters jedes elektrischen Drahts (2, 3, 4; 42, 43) gleich der doppelten ; Summe der Dicke des Überzugs (10; 45) des Leiters ist.

3. Hochfrequenzstrom-Mehrfachleiterkabel (1; 41) nach Anspruch 1 oder 2, **dadurch gekennzeichnet, dass** die Anzahl äußerer elektrischer Drähte (3, 4; 43), die außerhalb innerer elektrischer Drähte (2; 42), die von der Mitte des Kabels (1; 41) gleich beabstandet sind, angeordnet sind, ein ganzzahliges Vielfaches der Anzahl innerer elektrischer Drähte (2; 42) ist.

4. Leistungsversorgungsgerät für einen oder mehrere bewegliche Körper, das eine Induktionsleitung, die längs eines Bewegungspfades des einen oder der mehreren beweglichen Körper verläuft und einen konstanten Hochfrequenzstrom von einer Leistungsquellenvorrichtung liefert, und eine Aufnehmerspule, die in jedem beweglichen Körper vorgesehen ist und auf kontaktlose Weise von der Induktionsleitung mit Leistung versorgt wird, enthält, **dadurch gekennzeichnet, dass** die Induktionsleitung das Hochfrequenzstrom-Mehrfachleiterkabel (1; 41) nach einem der Ansprüche 1 bis 3 ist.

## Revendications

1. Câble à conducteurs multiples pour courant haute fréquence (1 ; 41) comprenant une pluralité de fils conducteurs gainés (2, 3, 4 ; 42, 43) et circuit d'équilibrage de courant pour courant haute fréquence circulant à travers chacun desdits fils conducteurs (2, 3, 4 ; 42, 43), **caractérisés en ce que** le circuit d'équilibrage de courant est formé en disposant en faisceaux les fils conducteurs (2, 3, 4 ; 42, 43) à équidistance du centre du câble (1 ; 41) et en faisant passer les faisceaux (A, B, C ; D, E) à travers un élément magnétique (5 ; 45) de manière à ce que les ampères-tours ou les densités de courant deviennent les mêmes.

2. Câble à conducteurs multiples pour courant haute fréquence (1 ; 41), tel que revendiqué dans la revendication 1, **caractérisé en ce que** le diamètre du conducteur de chaque fil conducteur (2, 3, 4 ; 42, 43) est égal à deux fois la somme de l'épaisseur de la gaine (10 ; 45) du conducteur.

3. Câble à conducteurs multiples pour courant haute fréquence (1 ; 41), tel que revendiqué dans les revendications 1 ou 2, **caractérisé en ce que** le nombre de fils conducteurs externes (3, 4 ; 43) disposés concentriquement autour des fils conducteurs internes (2 ; 42) équidistants du centre du câble (1 ; 41) est un multiple entier du nombre de fils conducteurs internes (2 ; 42).

4. Alimentation pour un ou plusieurs éléments mobiles, comprenant une ligne d'induction s'étendant le long d'un trajet de déplacement du ou des éléments mobiles et délivrant un courant haute fréquence constant à partir d'un dispositif source de puissance, et une bobine de détection disposée sur chaque élément mobile et étant alimentée, sans contact, par ladite ligne d'induction, **caractérisé en ce que** ladite ligne d'induction est le câble à conducteurs multiples pour courant haute fréquence (1 ; 41), tel que revendiqué dans l'une quelconque des revendications 1 à 3.
